# EUROPEAN PATENT SPECIFICATION

(11) **EP 4 220 758 B1**
(45) Date of publication and mention of the grant of the patent: **29.07.2026**
(21) Application number: 21870710.7
(22) Date of filing: 02.03.2021
(51) Int. Cl.: H01M 4/134, H01M 4/1395, H01M 4/36, H01M 4/38, H01M 4/40, H01M 4/58, H01M 4/587, H01M 4/62, H01M 4/02, H01M 10/052, H01M 10/0525

(54) **SILICON-BASED NEGATIVE ELECTRODE COMPOSITE MATERIAL AND LITHIUM SECONDARY BATTERY**
NEGATIVELEKTRODENVERBUNDMATERIAL AUF SILICIUMBASIS UND LITHIUMSEKUNDÄRBATTERIE
MATÉRIAU COMPOSITE D'ÉLECTRODE NÉGATIVE À BASE DE SILICIUM ET BATTERIE SECONDAIRE AU LITHIUM

(30) Priority: 27.09.2020 CN 202011031877
(43) Date of publication of application: 02.08.2023
(73) Proprietor: Tianmulake Excellent Anode Materials Co., Ltd., Liyang, Jiangsu 213330 (CN)
(72) Inventor: YIN, Yingying, Liyang, Jiangsu 213330 (CN); LIU, Bonan, Liyang, Jiangsu 213330 (CN); LUO, Fei, Liyang, Jiangsu 213330 (CN); LI, Hong, Liyang, Jiangsu 213330 (CN)
(74) Representative: Glück Kritzenberger Patentanwälte PartGmbB
(86) International application number: PCT/CN2021/078605
(87) International publication number: WO 2022/062321

(56) References cited:
- CN-A- 105 406 050
- CN-A- 105 489 840
- CN-A- 105 489 840
- CN-A- 105 870 423
- CN-A- 107 790 712
- CN-A- 109 755 515
- CN-A- 110 615 423
- CN-A- 110 767 891
- CN-A- 111 261 856
- CN-A- 112 151 760
- KR-A- 20160 070 909
- US-A1- 2012 175 551

## Description

### CROSS REFERENCE TO RELATED APPLICATIONS

This application claims priority for Chinese patent application No.202011031877.9, entitled "Silicon-Based Negative Electrode Composite Material and Lithium Secondary Battery", filed with China National Intellectual Property Administration on September 27, 2020.

### BACKGROUND OF THE PRESENT INVENTION

### 1. Technical Field

The present present invention relates to a technical field of secondary battery materials, in particular to a Silicon-based negative electrode composite material and a lithium secondary battery.

### 2. Description of Related Art

The rapid development of new energy vehicles has stimulated the market demand for lithium-ion batteries. On December 3, 2019, the Ministry of Industry and Information Technology announced the *New Energy Vehicle Industry Development Plan (2021-2035),* proposing that the sales of new energy vehicles will account for about 25% by 2025. It is estimated that by 2025, the installed capacity of power batteries for new energy vehicles in China will be about 324.01 GWh. Moreover, the pursuit of new energy vehicles for long mileage requires higher energy density of batteries. According to current industry analysis, the energy density of a battery cell will reach 350 Wh/Kg (750 Wh/L) in order to optimize the performance-price ratio of electric vehicles.

A Silicon-based negative electrode is a commercially developed negative electrode material with high energy density. For the Silicon-based negative electrode, a silicon atom can be combined with 4.4 lithium ions to form Li₂₂Si₅ alloy, which shows an ultra-high capacity of 4,200 mAh/g, but the process of lithium intercalation for forming the alloy is accompanied by about 300% volume expansion. With the progress of lithium intercalation and lithium deintercalation, the volume expansion will cause huge internal stress, thus destroying a solid electrolyte interface (SEI) film on a surface of a particle, and causing an active particle to crack or even fall off in the form of powder; and as a result, the particles fall off from a current collector, active materials lose efficacy, the battery capacity decrease rapidly, and the service life of a battery is shortened, which is not ideal in practicality.

Compared with silicon, SiOₓ has a smaller capacity, but has obvious advantages in relieving volume expansion and prolonging the cycle life of batteries. Amorphous SiOₓ is composed of Si particles below 5 nm or metallic silicon clusters uniformly dispersed in a SiO₂ matrix. When lithium is intercalated in the first cycle, lithium reacts with SiO₂ to generate a variety of irreversible lithium oxides, such as Li₂O, Li₂Si₂O₅, Li₂SiO₃, Li₄SiO₄, etc. These irreversible products will serve as buffer zones for the volume expansion of silicon, and inhibit the volume expansion of silicon. However, the function of the buffer zones is limited, which cannot make the cycle performance of SiOₓ reach a practical standard. Moreover, the formation of the irreversible lithium oxides will also lead to the loss of lithium, which will reduce the first-cycle charge and discharge efficiency of batteries to below 75%. In addition, SiOₓ itself has poor conductivity, which limits the effective discharge of battery capacity at a high rate.

In order to reduce the expansion of the Silicon-based negative electrode and improve rate performance, carbon coating is commonly conducted. A carbon layer can improve the conductivity of the surface of the particle, and the constraint on the particle can reduce the volume expansion of the Silicon-based negative electrode. In addition, the carbon layer can reduce a contact area between the particle and an electrolyte, and improve the first-cycle efficiency of the material. However, carbon coating can only improve the surface conductivity of the material, and the ability of conducting electrons and lithium ions inside the particle is not changed.

However, at present, the Silicon-based negative electrode still faces the problems of large volume expansion and low rate performance, which need to be solved urgently.

The document US2012175551 discloses a negative active material comprising the features of the preamble of claim 1.

### BRIEF SUMMARY OF THE PRESENT INVENTION

The embodiments of the present present invention provide a Silicon-based negative electrode composite material and a lithium secondary battery. A Silicon-based negative electrode is a composite material containing LiₓM_{y}Si_{z} alloy in a lithium intercalation state, and the alloy material is dispersed throughout a Silicon-based particle, which increases the conductivity of the material. In addition, a surface of the Silicon-based particle is coated with a carbon layer, which increases the conductivity of the surface of the Silicon-based particle. A lithium secondary battery prepared from the Silicon-based negative electrode composite material has excellent rate performance.

In a first aspect, an embodiment of the present invention provides a Silicon-based negative electrode composite material, which is a composite material composed of Silicon-based particles and carbon coating layers coated on surfaces of the Silicon-based particles;
the Silicon-based particle is a composite material containing LiₓM_{y}Si_{z} alloy in a lithium intercalation state; 0 < x < 25, 0 < y < 5, 0 < z < 6; M is one or more of Ni, Cu, Zn, Al, Na, Mg, Au, N and P;
an average particle diameter (D₅₀) of the Silicon-based particles is 0.1-40 µm, and a specific surface area is 0.5-40 m²/g; and after lithium intercalation, the LiₓM_{y}Si_{z} alloy is dispersed throughout the Silicon-based particle, a grain size is 0.5-100 nm, the LiₓM_{y}Si_{z} alloy accounts for 5-60% of a total mass of the Silicon-based negative electrode composite material after lithium intercalation, and a thickness of the carbon coating layer is 1-100 nm.

Preferably, the LiₓM_{y}Si_{z} alloy accounts for 10-30% of the total mass of the Silicon-based negative electrode composite material after lithium intercalation;
the thickness of the carbon coating layer is 5-25 nm; and
the average particle diameter (D₅₀) of the Silicon-based particles is 2-15 µm, and the specific surface area is 1-10 m²/g.

Preferably, when M is Ni, the LiₓM_{y}Si_{z} alloy is specifically Li₁₃Ni₉Si₁₈ and/or Li₃Ni₆Si₆, and corresponding maximum X-ray diffraction (XRD) peaks are located at 22.1 degrees and/or 47.7 degrees;
when M is Cu, the LiₓM_{y}Si_{z} alloy is specifically LiCuSi, and corresponding maximum XRD peaks are located at 43.0 degrees, 47.62 degrees and 49.8 degrees;
when M is Zn, the LiₓM_{y}Si_{z} alloy is specifically Li₂ZnSi, and corresponding maximum XRD peaks are located at 21.6 degrees and 32.6 degrees;
when M is Al, the LiₓM_{y}Si_{z} alloy is specifically Li₁₂Al₃Si₄ and/or LiAlSi, and corresponding maximum XRD peaks are located at 20.5 degrees and/or 26.0 degrees respectively;
when M is Na, the LiₓM_{y}Si_{z} alloy is specifically Li₃NaSi₆, and corresponding maximum XRD peaks are located at 9.8 degrees;
when M is Mg, the LiₓM_{y}Si_{z} alloy is specifically Li₁₂Mg₃Si₄, and corresponding maximum XRD peaks are located at 20.3 degrees;
when M is Au, the LiₓM_{y}Si_{z} alloy is specifically Li₂Au₃Si, and corresponding maximum XRD peaks are located at 25.4 degrees;
when M is N, the LiₓM_{y}Si_{z} alloy is specifically LiN₃Si₂ and/or Li₈N₄Si and/or Li₂₁N₁₁Si₃ and/or Li₁₈N₁₀Si₃, and corresponding maximum XRD peaks are located at 56.2 degrees and/or 32.3 degrees and/or 23.0 degrees and/or 54.6 degrees respectively; and
when M is P, the LiₓM_{y}Si_{z} alloy is specifically Li₅P₃Si, and corresponding maximum XRD peaks are located at 26.3 degrees.

Preferably, the Silicon-based particle is a composite material containing M_{q}Si in a non-lithium intercalation state, and 0<q<5.

In a second aspect, an embodiment of the present invention provides a Silicon-based negative electrode, which comprises the Silicon-based negative electrode composite material described in the first aspect.

In a third aspect, an embodiment of the present invention provides a lithium secondary battery, which comprises the Silicon-based negative electrode composite material described in the first aspect or the Silicon-based negative electrode described in claim 4.

Preferably, the lithium secondary battery is any one of a liquid lithium ion battery, a semi-solid lithium ion battery, an all-solid ion battery or a lithium-sulfur battery.

The Silicon-based negative electrode of the Silicon-based negative electrode composite material provided by the present invention is a composite material containing LiₓM_{y}Si_{z} alloy in the lithium intercalation state, and in the lithium intercalation state, the alloy is dispersed throughout the Silicon-based negative electrode particle, which increases conductivity inside the particle, and the ductility of the alloy provides an elastic space for the volume expansion of the particle. According to the present invention , the carbon layer is coated on the surface of the Silicon-based negative electrode particle, so that the conductivity of the surface of the particle is increased. Therefore, the Silicon-based negative electrode composite material provided by the present invention has the advantages of long cycle, high rate and high stability, and also ensures high capacity.

### BRIEF DESCRIPTION OF THE SEVERAL VIEWS OF THE DRAWINGS

The technical solution of the embodiments of the present invention will be described in further detail with reference to the drawings and embodiments.
Fig. 1 is an X-ray diffraction (XRD) diagram of a Silicon-based negative electrode composite material of a lithium secondary battery in a lithium intercalation state provided by an embodiment of the present invention ;
Fig. 2 is a scanning electron microscope (SEM) diagram of Silicon-based negative particles of a lithium secondary battery provided by an embodiment of the present invention ; and
Fig. 3 is a comparison chart of the rate performance of lithium secondary batteries provided by Embodiment 1 and Comparative Example 1.

### DETAILED DESCRIPTION OF THE PRESENT INVENTION

The present invention will be further explained below by referring to drawings and specific embodiments, but it should be understood that these embodiments are only for more detailed explanation, and should not be construed as limiting the present invention in any way, that is, not intended to limit the scope of protection of the present invention.

The present invention provides a Silicon-based negative electrode composite material, which is a composite material composed of Silicon-based particles and carbon coating layers coated on surfaces of the Silicon-based particles;
the Silicon-based particle is a composite material containing LiₓM_{y}Si_{z} alloy in a lithium intercalation state; 0 < x < 25, 0 < y < 5, 0 < z < 6; M is one or more of Ni, Cu, Zn, Al, Na, Mg, Au, N and P; and the Silicon-based particle is a composite material containing M_{q}Si in a non-lithium intercalation state, and 0<q<5.

When M is Ni, the LiₓM_{y}Si_{z} alloy is Li₁₃Ni₉Si₁₈ and/or Li₃Ni₆Si₆, and corresponding maximum X-ray diffraction (XRD) peaks are located at 22.1 degrees and/or 47.7 degrees;
when M is Cu, the LiₓM_{y}Si_{z} alloy is LiCuSi, and corresponding maximum XRD peaks are located at 43.0 degrees, 47.62 degrees and 49.8 degrees;
when M is Zn, the LiₓM_{y}Si_{z} alloy is Li₂ZnSi, and corresponding maximum XRD peaks are located at 21.6 degrees and 32.6 degrees;
when M is Al, the LiₓM_{y}Si_{z} alloy is Li₁₂Al₃Si₄ and/or LiAlSi, and corresponding maximum XRD peaks are located at 20.5 degrees and/or 26.0 degrees respectively;
when M is Na, the LiₓM_{y}Si_{z} alloy is Li₃NaSi₆, and corresponding maximum XRD peaks are located at 9.8 degrees;
when M is Mg, the LiₓM_{y}Si_{z} alloy is Li₁₂Mg₃Si₄, and corresponding maximum XRD peaks are located at 20.3 degrees;
when M is Au, the LiₓM_{y}Si_{z} alloy is Li₂Au₃Si, and corresponding maximum XRD peaks are located at 25.4 degrees;
when M is N, the LiₓM_{y}Si_{z} alloy is LiN₃Si₂ and/or Li₈N₄Si and/or Li₂₁N₁₁Si₃ and/or Li₁₈N₁₀Si₃, and corresponding maximum XRD peaks are located at 56.2 degrees and/or 32.3 degrees and/or 23.0 degrees and/or 54.6 degrees respectively; and
when M is P, the LiₓM_{y}Si_{z} alloy is Li₅P₃Si, and corresponding maximum XRD peaks are located at 26.3 degrees.

In the Silicon-based negative electrode composite material of the present invention, the average particle diameter (D₅₀) of Silicon-based particles is from 0.1 to 40 µm, and the specific surface area is form 0.5 to 40 m²/g. In a preferred embodiment, the average particle diameter (D₅₀) of the Silicon-based particles is 2-15 µm, and the specific surface area is from 1 m²/g to 10 m²/g.

In a lithium deintercalation state, M_{q}Si is dispersed throughout the Silicon-based particle at nanometer level.

After lithium intercalation, the LiₓM_{y}Si_{z} alloy is dispersed throughout the Silicon-based particle, which can increase the conductivity inside the particle, and the ductility of the alloy provides an elastic space for the volume expansion of the particle.

The grain size of the LiₓM_{y}Si_{z} alloy is 0.5-100 nm. After lithium intercalation, the LiₓM_{y}Si_{z} alloy accounts for from 5% to 60% of the total mass of the Silicon-based negative electrode composite material after lithium intercalation. In a preferred embodiment, it accounts for 10% -30% of the total mass of the Silicon-based negative electrode composite material.

The thickness of the carbon coating layer is 1-100 nm, preferably 5-25 nm. Carbon sources used for preparing the carbon coating layer include one or more of toluene, methane, acetylene, glucose, asphalt or high molecular polymer.

The Silicon-based negative electrode of the Silicon-based negative electrode composite material provided by the present invention is a composite material containing LixMySiz alloy in the lithium intercalation state, and the alloy is dispersed throughout the Silicon-based negative electrode particle, which increases conductivity inside the particle, and the ductility of the alloy provides an elastic space for the volume expansion of the particle. According to the present invention, the carbon layer is coated on the surface of the Silicon-based negative electrode particle, so that the conductivity of the surface of the particle is increased. Therefore, the Silicon-based negative electrode composite material provided by the present invention has the advantages of long cycle, high rate and high stability, and also ensures high capacity.

In order to better understand the technical scheme provided by the present invention, the specific process of preparing the Silicon-based negative electrode composite material of the present invention, and the method and characteristics of its application in a lithium secondary battery are described below with several specific examples.

### Embodiment 1

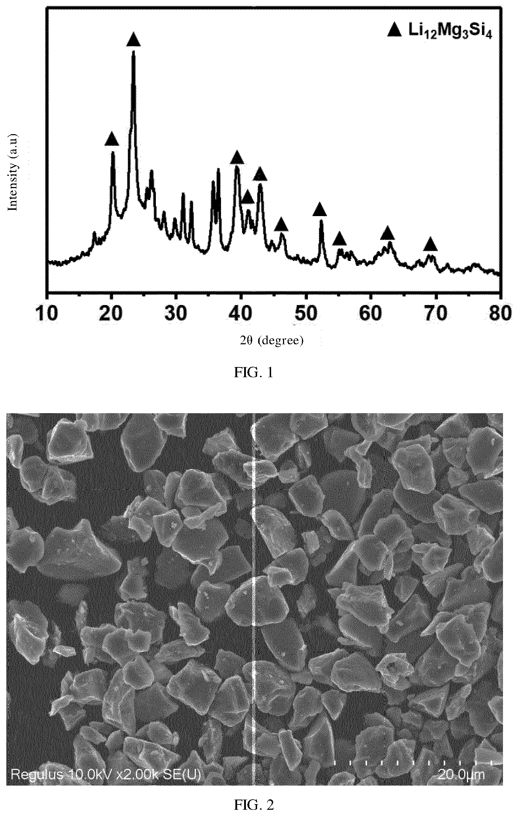

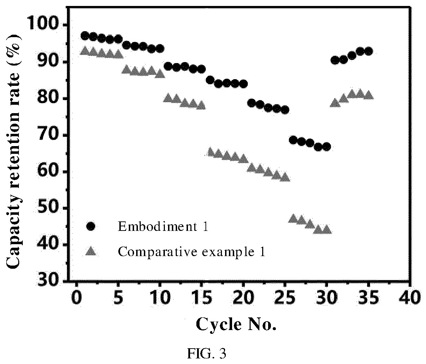

(1) Metal silicon powder, metal magnesium powder and silicon dioxide powder were uniformly mixed according to the molar ratio of 2: 1: 1, and placed in a high-temperature furnace;
(2) the mixture was sintered at 1200°C for 2 hours in a nitrogen protection atmosphere, and then cooled, crushed and screened;
(3) the screened sample was mixed with glucose according to the mass ratio of 20:1, and the mixture was placed in a high-temperature furnace to be subjected to heat treatment at 900°C in a nitrogen atmosphere for 2 hours to obtain a carbon-coated magnesium-doped Silicon-based negative electrode, the SEM diagram of which is shown in Fig. 2; and it can be seen from Fig. 2 that the prepared Silicon-based negative electrode is composed of potato-like micron-sized particles;
(4) the carbon-coated magnesium-doped Silicon-based negative electrode, conductive carbon black SP and sodium carboxymethyl cellulose (CMC) were mixed according to the ratio of 7: 2: 1 to prepare negative electrode slurry, a negative electrode sheet was prepared after coating and drying, the ternary positive electrode material, Lithium nickel cobalt manganate NCM811, was used as a counter electrode, a button cell was assembled in a glove box, which was charged, and then electrochemical performance was evaluated;
(5) the button cell was subjected to the first cycle of charging first, the charging mode is 0.1 C to 4.2 V, and constant-voltage charging to 0.02 C was conducted; and this process is the lithium intercalation process of a Silicon-based negative electrode;
(6) in the glove box, the button cell with the negative electrode in the lithium intercalation state was disassembled, the negative electrode sheet was soaked and washed with a dimethyl carbonate (DMC) solvent, an electrode sheet material was scraped off after air-drying for an XRD test, and the XRD diagram obtained is shown in Fig. 1; and it can be clearly seen from Fig. 1 that the material contains Li₁₂Mg₃Si₄ alloy, with the main peak at 20.3 degrees; and
(7) a rate test was conducted on the button cell; the test procedure is as follows: charging to 4.2 V at 0.1 C was conducted in the first three cycles, constant-voltage charging to 0.02 C was conducted, and discharging to 2.75 V at 0.1 C was conducted after standing for 5 s; after that, charge and discharge cut-off voltage was kept unchanged, and the charge and discharge rate was changed to 0.5 C, 1 C, 2 C, 3 C, 5 C, 10 C and 0.5 C in turn; each of the above-mentioned rates was cycled for five times, and the average value of each rate in the five times was used to evaluate rate performance; the results are shown in Table 1; and the dot mark in Fig. 3 shows the test results of the rate performance of the battery provided in Embodiment 1 of the present invention after five cycles under different charge and discharge rates, and the test data at the rates of 0.5 C, 1 C, 2 C, 3 C, 5 C, 10 C and 0.5 C are shown from left to right.

### Embodiment 2

(1) Silica powder was dispersed and ball-milled in a mixed solvent of ethanol and water (volume ratio 1:2) for 1 hour, and magnesium oxide powder was added according to the molar ratio of 2:1 for another 2 hours of ball-milling;
(2) the ball-milled slurry was centrifuged and dried;
(3) a dried precursor was placed in a rotary furnace, a mixed gas of argon and methane with a volume ratio of 3:1 was introduced at 1000°C, and the temperature was kept for 2 hours to obtain a carbon-coated magnesium-doped Silicon-based negative electrode;
(4) the carbon-coated magnesium-doped Silicon-based negative electrode, conductive carbon black SP and sodium carboxymethyl cellulose (CMC) were mixed according to the ratio of 7: 2: 1 to prepare negative electrode slurry, a negative electrode sheet was prepared after coating and drying, the positive electrode material, Lithium cobaltate LCO, was used as a counter electrode, a button cell was assembled in a glove box, which was charged, and then electrochemical performance was evaluated;
(5) a rate test was conducted on the button cell; the test procedure is as follows: charging to 4.4 V at 0.1 C was conducted in the first three cycles, constant-voltage charging to 0.02 C was conducted, and discharging to 2.75 V at 0.1 C was conducted after standing for 5 s; after that, charge and discharge cut-off voltage was kept unchanged, and the charge and discharge rate was changed to 0.5 C, 1 C, 2 C, 3 C, 5 C, 10 C and 0.5 C in turn; each of the above-mentioned rates was cycled for five times, and the average value of each rate in the five times was used to evaluate rate performance; and the results are shown in Table 1.

### Embodiment 3

(1) Metal silicon powder, aluminum oxide powder and silicon dioxide powder were uniformly mixed according to the molar ratio of 2: 1: 1, and placed in a vacuum furnace;
(2) the mixture was heat-treated at 900°C for 2 hours in vacuum, and then cooled, crushed and screened;
(3) the screened sample was mixed with petroleum asphalt according to the mass ratio of 20:1, and the mixture was placed in a high-temperature furnace to be subjected to heat treatment at 900°C in a nitrogen atmosphere for 2 hours to obtain a carbon-coated aluminum-doped Silicon-based negative electrode;
(4) the carbon-coated aluminum-doped Silicon-based negative electrode, conductive carbon black SP and sodium carboxymethyl cellulose (CMC) were mixed according to the ratio of 7: 2: 1 to prepare negative electrode slurry, a negative electrode sheet was prepared after coating and drying, the ternary positive electrode material, Lithium nickel cobalt manganate NCM333, was used as a counter electrode, a button cell was assembled in a glove box, which was charged, and then electrochemical performance was evaluated; and
(5) a rate test was conducted on the button cell; the test procedure is as follows: charging to 4.2 V at 0.1 C was conducted in the first three cycles, constant-voltage charging to 0.02 C was conducted, and discharging to 2.75 V at 0.1 C was conducted after standing for 5 s; after that, charge and discharge cut-off voltage was kept unchanged, and the charge and discharge rate was changed to 0.5 C, 1 C, 2 C, 3 C, 5 C, 10 C and 0.5 C in turn; each of the above-mentioned rates was cycled for five times, and the average value of each rate in the five times was used to evaluate rate performance; and the results are shown in Table 1.

### Embodiment 4

(1) Silica powder was dispersed and ball-milled in a mixed solvent of ethanol and water (volume ratio 1:2) for 1 hour, and aluminum oxide powder was added according to the molar ratio of 2:1 for another 2 hours of ball-milling;
(2) the ball-milled slurry was centrifuged and dried;
(3) a dried precursor was placed in a rotary furnace, a mixed gas of argon and acetylene with a volume ratio of 2:1 was introduced at 950°C, and the temperature was kept for 2 hours to obtain a carbon-coated aluminum-doped Silicon-based negative electrode;
(4) the carbon-coated aluminum-doped Silicon-based negative electrode, conductive carbon black SP and sodium carboxymethyl cellulose (CMC) were mixed according to the ratio of 7: 2: 1 to prepare negative electrode slurry, a negative electrode sheet was prepared after coating and drying, the ternary positive electrode material, Lithium nickel cobalt manganate NCM523, was used as a counter electrode, a button cell was assembled in a glove box, which was charged, and then electrochemical performance was evaluated; and
(5) a rate test was conducted on the button cell; the test procedure is as follows: charging to 4.2 V at 0.1 C was conducted in the first three cycles, constant-voltage charging to 0.02 C was conducted, and discharging to 2.75 V at 0.1 C was conducted after standing for 5 s; after that, charge and discharge cut-off voltage was kept unchanged, and the charge and discharge rate was changed to 0.5 C, 1 C, 2 C, 3 C, 5 C, 10 C and 0.5 C in turn; each of the above-mentioned rates was cycled for five times, and the average value of each rate in the five times was used to evaluate rate performance; and the results are shown in Table 1.

### Embodiment 5

(1) Silica powder was fully and evenly stirred in a mixed solvent of ethanol and water (volume ratio 1:2), a phosphoric acid solution was added while stirring according to the molar ratio of 2:1, and then the mixture was fully stirred for 2 hours;
(2) the mixed slurry was directly dried;
(3) the dried slurry was placed in a high-temperature furnace, and the mixture was sintered at 1100°C for 2 hours in a nitrogen protection atmosphere, and then cooled, crushed and screened;
(4) a screened precursor was placed in a rotary furnace, a mixed gas of argon and acetylene with a volume ratio of 2:1 was introduced at 950°C, and the temperature was kept for 2 hours to obtain a carbon-coated phosphorus-doped Silicon-based negative electrode;
(5) the carbon-coated phosphorus-doped Silicon-based negative electrode, conductive carbon black SP and sodium carboxymethyl cellulose (CMC) were mixed according to the ratio of 7: 2: 1 to prepare negative electrode slurry, a negative electrode sheet was prepared after coating and drying, the ternary positive electrode material, Lithium nickel cobalt aluminate NCA, was used as a counter electrode, a button cell was assembled in a glove box, which was charged, and then electrochemical performance was evaluated; and
(6) a rate test was conducted on the button cell; the test procedure is as follows: charging to 4.2 V at 0.1 C was conducted in the first three cycles, constant-voltage charging to 0.02 C was conducted, and discharging to 2.75 V at 0.1 C was conducted after standing for 5 s; after that, charge and discharge cut-off voltage was kept unchanged, and the charge and discharge rate was changed to 0.5 C, 1 C, 2 C, 3 C, 5 C, 10 C and 0.5 C in turn; each of the above-mentioned rates was cycled for five times, and the average value of each rate in the five times was used to evaluate rate performance; and the results are shown in Table 1.

### Embodiment 6

(1) Silica powder was fully and evenly stirred in a mixed solvent of ethanol and water (volume ratio 1:2), a 2-chloroethylamine hydrochloride solution was added while stirring according to the molar ratio of 2:1, and then the mixture was fully stirred for 2 hours;
(2) the mixed slurry was directly dried;
(3) the dried slurry was placed in a vacuum furnace, and the mixture was heat-treated at 1000°C for 2 hours in vacuum, and then cooled, crushed and screened;
(4) a screened precursor and phenolic resin were dissolved in an alcohol solvent according to the ratio of 20:1, and stirred for 6 hours to form uniform slurry;
(5) the above slurry was directly dried;
(6) the dried slurry was placed in a high-temperature furnace, and the mixture was sintered at 900°C for 2 hours in a nitrogen protection atmosphere, and then cooled, crushed and screened to obtain a carbon-coated nitrogen-doped Silicon-based negative electrode;
(7) the carbon-coated nitrogen-doped Silicon-based negative electrode, conductive carbon black SP and sodium carboxymethyl cellulose (CMC) were mixed according to the ratio of 7: 2: 1 to prepare negative electrode slurry, a negative electrode sheet was prepared after coating and drying, the positive electrode material, LFP, was used as a counter electrode, a button cell was assembled in a glove box, which was charged, and then electrochemical performance was evaluated;
(8) a rate test was conducted on the button cell; the test procedure is as follows: charging to 4.2 V at 0.1 C was conducted in the first three cycles, constant-voltage charging to 0.02 C was conducted, and discharging to 2.75 V at 0.1 C was conducted after standing for 5 s; after that, charge and discharge cut-off voltage was kept unchanged, and the charge and discharge rate was changed to 0.5 C, 1 C, 2 C, 3 C, 5 C, 10 C and 0.5 C in turn; each of the above-mentioned rates was cycled for five times, and the average value of each rate in the five times was used to evaluate rate performance; and the results are shown in Table 1.

### Embodiment 7

(1) Metal silicon powder and zinc oxide powder were uniformly mixed according to the molar ratio of 2:1, and placed in a high-temperature furnace;
(2) the mixture was sintered at 1100°C for 2 hours in a nitrogen protection atmosphere, and then cooled, crushed and screened;
(3) the screened sample was mixed with petroleum asphalt according to the mass ratio of 20:1, and the mixture was placed in a high-temperature furnace to be subjected to heat treatment at 900°C in a nitrogen atmosphere for 2 hours to obtain a carbon-coated zinc-doped Silicon-based negative electrode;
(4) the carbon-coated zinc-doped Silicon-based negative electrode, conductive carbon black SP and sodium carboxymethyl cellulose (CMC) were mixed according to the ratio of 7: 2: 1 to prepare negative electrode slurry, a negative electrode sheet was prepared after coating and drying, the positive electrode material, LMO, was used as a counter electrode, a button cell was assembled in a glove box, which was charged, and then electrochemical performance was evaluated;
(5) a rate test was conducted on the button cell; the test procedure is as follows: charging to 4.2 V at 0.1 C was conducted in the first three cycles, constant-voltage charging to 0.02 C was conducted, and discharging to 2.75 V at 0.1 C was conducted after standing for 5 s; after that, charge and discharge cut-off voltage was kept unchanged, and the charge and discharge rate was changed to 0.5 C, 1 C, 2 C, 3 C, 5 C, 10 C and 0.5 C in turn; each of the above-mentioned rates was cycled for five times, and the average value of each rate in the five times was used to evaluate rate performance; and the results are shown in Table 1.

### Embodiment 8

(1) Metal silicon powder, metal zinc powder and silicon dioxide powder were uniformly mixed according to the molar ratio of 2: 1: 1, and placed in a high-temperature furnace;
(2) the mixture was sintered at 1200°C for 2 hours in a nitrogen protection atmosphere, and then cooled, crushed and screened;
(3) the screened sample was mixed with glucose according to the mass ratio of 20:1, and the mixture was placed in a high-temperature furnace to be subjected to heat treatment at 900°C in a nitrogen atmosphere for 2 hours to obtain a carbon-coated zinc-doped Silicon-based negative electrode;
(4) the carbon-coated zinc-doped Silicon-based negative electrode, conductive carbon black SP and sodium carboxymethyl cellulose (CMC) were mixed according to the ratio of 7: 2: 1 to prepare negative electrode slurry, a negative electrode sheet was prepared after coating and drying, the ternary positive electrode material, NCM811, was used as a counter electrode, garnet type Li₇La₃Zr₂O₁₂(LLZO) was used as a solid electrolyte, an all-solid button cell was assembled in a glove box, which was charged, and then electrochemical performance was evaluated;
(5) a rate test was conducted on the button cell; the test procedure is as follows: charging to 4.2 V at 0.1 C was conducted in the first three cycles, constant-voltage charging to 0.02 C was conducted, and discharging to 2.75 V at 0.1 C was conducted after standing for 5 s; after that, charge and discharge cut-off voltage was kept unchanged, and the charge and discharge rate was changed to 0.5 C, 1 C, 2 C, 3 C, 5 C, 10 C and 0.5 C in turn; each of the above-mentioned rates was cycled for five times, and the average value of each rate in the five times was used to evaluate rate performance; and the results are shown in Table 1.

### Embodiment 9

(1) Metal silicon powder and copper oxide powder were uniformly mixed according to the molar ratio of 2:1, and placed in a high-temperature furnace;
(2) the mixture was sintered at 1100°C for 2 hours in a nitrogen protection atmosphere, and then cooled, crushed and screened;
(3) the screened sample and polyvinylidene fluoride (PVDF) were dissolved in an N,N-dimethylformamide (NMF) solvent according to the ratio of 20:1, and stirred for 6 hours to form uniform slurry;
(4) the above slurry was directly dried;
(5) the dried slurry was placed in a high-temperature furnace, and the mixture was sintered at 900°C for 2 hours in a nitrogen protection atmosphere, and then cooled, crushed and screened to obtain a carbon-coated copper-doped Silicon-based negative electrode;
(6) the carbon-coated copper-doped Silicon-based negative electrode, conductive carbon black SP and sodium carboxymethyl cellulose (CMC) were mixed according to the ratio of 7: 2: 1 to prepare negative electrode slurry, a negative electrode sheet was prepared after coating and drying, the ternary positive electrode material, NCM811, was used as a counter electrode, a polyolefin-based gel polymer electrolyte membrane was used as a semi-solid electrolyte, a semi-solid button cell was assembled in a glove box, which was charged, and then electrochemical performance was evaluated;
(7) a rate test was conducted on the button cell; the test procedure is as follows: charging to 4.2 V at 0.1 C was conducted in the first three cycles, constant-voltage charging to 0.02 C was conducted, and discharging to 2.75 V at 0.1 C was conducted after standing for 5 s; after that, charge and discharge cut-off voltage was kept unchanged, and the charge and discharge rate was changed to 0.5 C, 1 C, 2 C, 3 C, 5 C, 10 C and 0.5 C in turn; each of the above-mentioned rates was cycled for five times, and the average value of each rate in the five times was used to evaluate rate performance; and the results are shown in Table 1.

### Embodiment 10

(1) Silica powder and a copper acetate solution were fully and evenly stirred in water according to the molar ratio of 2:1, a sodium hydroxide solution of 1 mol/L was added while stirring, and then the mixture was fully stirred for 2 hours;
(2) the slurry was centrifugally washed for many times, and dried;
(3) the dried precursor was placed in a high-temperature furnace and sintered at 1100°C for 2 hours in a nitrogen protection atmosphere, and then cooled, crushed and screened;
(4) a screened precursor was placed in a rotary furnace, a mixed gas of argon and methane with a volume ratio of 3:1 was introduced at 1000°C, and the temperature was kept for 2 hours to obtain a carbon-coated copper-doped Silicon-based negative electrode;
(5) the carbon-coated copper-doped Silicon-based negative electrode, conductive carbon black SP and sodium carboxymethyl cellulose (CMC) were mixed according to the ratio of 7: 2: 1 to prepare negative electrode slurry, a negative electrode sheet was prepared after coating and drying, the ternary positive electrode material, NCM811, was used as a counter electrode, a button cell was assembled in a glove box, which was charged, and then electrochemical performance was evaluated;
(6) a rate test was conducted on the button cell; the test procedure is as follows: charging to 4.2 V at 0.1 C was conducted in the first three cycles, constant-voltage charging to 0.02 C was conducted, and discharging to 2.75 V at 0.1 C was conducted after standing for 5 s; after that, charge and discharge cut-off voltage was kept unchanged, and the charge and discharge rate was changed to 0.5 C, 1 C, 2 C, 3 C, 5 C, 10 C and 0.5 C in turn; each of the above-mentioned rates was cycled for five times, and the average value of each rate in the five times was used to evaluate rate performance; and the results are shown in Table 1.

### Embodiment 11

(1) Silica powder and a nickel acetate solution were fully and evenly stirred in water according to the molar ratio of 2:1, a sodium hydroxide solution of 1 mol/L was added while stirring, and then the mixture was fully stirred for 2 hours;
(2) the slurry was centrifugally washed for many times, and dried;
(3) the dried precursor was placed in a high-temperature furnace and sintered at 1100°C for 2 hours in a nitrogen protection atmosphere, and then cooled, crushed and screened;
(4) a screened precursor was placed in a rotary furnace, a mixed gas of argon and methane with a volume ratio of 3:1 was introduced at 1000°C, and the temperature was kept for 2 hours to obtain a carbon-coated nickel-doped Silicon-based negative electrode;
(5) the carbon-coated nickel-doped Silicon-based negative electrode, conductive carbon black SP and sodium carboxymethyl cellulose (CMC) were mixed according to the ratio of 7: 2: 1 to prepare negative electrode slurry, a negative electrode sheet was prepared after coating and drying, the ternary positive electrode material, NCM811, was used as a counter electrode, a button cell was assembled in a glove box, which was charged, and then electrochemical performance was evaluated;
(6) a rate test was conducted on the button cell; the test procedure is as follows: charging to 4.2 V at 0.1 C was conducted in the first three cycles, constant-voltage charging to 0.02 C was conducted, and discharging to 2.75 V at 0.1 C was conducted after standing for 5 s; after that, charge and discharge cut-off voltage was kept unchanged, and the charge and discharge rate was changed to 0.5 C, 1 C, 2 C, 3 C, 5 C, 10 C and 0.5 C in turn; each of the above-mentioned rates was cycled for five times, and the average value of each rate in the five times was used to evaluate rate performance; and the results are shown in Table 1.

### Embodiment 12

(1) Silica powder and gold powder were uniformly mixed according to the molar ratio of 2:1, and placed in a vacuum furnace;
(2) the mixture was heat-treated at 1200°C for 3 hours in vacuum, and then cooled, crushed and screened;
(3) the screened sample was mixed with petroleum asphalt according to the mass ratio of 20:1, and the mixture was placed in a high-temperature furnace to be subjected to heat treatment at 900°C in a nitrogen atmosphere for 2 hours to obtain a carbon-coated gold-doped Silicon-based negative electrode;
(4) the carbon-coated gold-doped Silicon-based negative electrode, conductive carbon black SP and sodium carboxymethyl cellulose (CMC) were mixed according to the ratio of 7: 2: 1 to prepare negative electrode slurry, a negative electrode sheet was prepared after coating and drying, the ternary positive electrode material, NCM811, was used as a counter electrode, a button cell was assembled in a glove box, which was charged, and then electrochemical performance was evaluated;
(5) a rate test was conducted on the button cell; the test procedure is as follows: charging to 4.2 V at 0.1 C was conducted in the first three cycles, constant-voltage charging to 0.02 C was conducted, and discharging to 2.75 V at 0.1 C was conducted after standing for 5 s; after that, charge and discharge cut-off voltage was kept unchanged, and the charge and discharge rate was changed to 0.5 C, 1 C, 2 C, 3 C, 5 C, 10 C and 0.5 C in turn; each of the above-mentioned rates was cycled for five times, and the average value of each rate in the five times was used to evaluate rate performance; and the results are shown in Table 1.

### Embodiment 13

(1) Silica powder and a sodium acetate solution were fully and evenly stirred in water according to the molar ratio of 2:1;
(2) the above slurry was directly dried;
(3) the dried precursor was placed in a high-temperature furnace and sintered at 1100°C for 2 hours in an argon protection atmosphere, and then cooled, crushed and screened;
(4) a screened precursor was placed in a rotary furnace, a mixed gas of argon and acetylene with a volume ratio of 3:1 was introduced at 900°C, and the temperature was kept for 2 hours to obtain a carbon-coated sodium-doped Silicon-based negative electrode;
(5) the carbon-coated sodium-doped Silicon-based negative electrode, conductive carbon black SP and sodium carboxymethyl cellulose (CMC) were mixed according to the ratio of 7: 2: 1 to prepare negative electrode slurry, a negative electrode sheet was prepared after coating and drying, the ternary positive electrode material, NCM811, was used as a counter electrode, a button cell was assembled in a glove box, which was charged, and then electrochemical performance was evaluated;
(6) a rate test was conducted on the button cell; the test procedure is as follows: charging to 4.2 V at 0.1 C was conducted in the first three cycles, constant-voltage charging to 0.02 C was conducted, and discharging to 2.75 V at 0.1 C was conducted after standing for 5 s; after that, charge and discharge cut-off voltage was kept unchanged, and the charge and discharge rate was changed to 0.5 C, 1 C, 2 C, 3 C, 5 C, 10 C and 0.5 C in turn; each of the above-mentioned rates was cycled for five times, and the average value of each rate in the five times was used to evaluate rate performance; and the results are shown in Table 1.

### Embodiment 14

(1) Silica powder and a nickel acetate solution were fully and evenly stirred in water according to the molar ratio of 2:1, a sodium hydroxide solution of 1 mol/L was added while stirring, and then the mixture was fully stirred for 2 hours;
(2) the slurry was centrifugally washed for many times, and dried;
(3) the dried precursor was placed in a high-temperature furnace and sintered at 1100°C for 2 hours in a nitrogen protection atmosphere, and then cooled, crushed and screened;
(4) a screened precursor was placed in a rotary furnace, a mixed gas of argon and methane with a volume ratio of 3:1 was introduced at 1000°C, and the temperature was kept for 2 hours to obtain a carbon-coated nickel-doped Silicon-based negative electrode;
(5) the carbon-coated nickel-doped silicon-based negative electrode and commercial graphite were compounded into a 450 mAh/g composite material, the positive electrode material, Lithium cobaltate LCO, was used as a counter electrode, a button cell was assembled in a glove box, which was charged, and then electrochemical performance was evaluated;
(6) a rate test was conducted on the button cell; the test procedure is as follows: charging to 4.4 V at 0.1 C was conducted in the first three cycles, constant-voltage charging to 0.02 C was conducted, and discharging to 2.75 V at 0.1 C was conducted after standing for 5 s; after that, charge and discharge cut-off voltage was kept unchanged, and the charge and discharge rate was changed to 0.5 C, 1 C, 2 C, 3 C, 5 C, 10 C and 0.5 C in turn; each of the above-mentioned rates was cycled for five times, and the average value of each rate in the five times was used to evaluate rate performance; and the results are shown in Table 1.

### Embodiment 15

(1) Metal silicon powder, aluminum oxide powder and silicon dioxide powder were uniformly mixed according to the molar ratio of 2: 1: 1, and placed in a vacuum furnace;
(2) the mixture was heat-treated at 900°C for 2 hours in vacuum, and then cooled, crushed and screened;
(3) the screened sample was mixed with petroleum asphalt according to the mass ratio of 20:1, and the mixture was placed in a high-temperature furnace to be subjected to heat treatment at 900°C in a nitrogen atmosphere for 2 hours to obtain a carbon-coated aluminum-doped Silicon-based negative electrode;
(4) the carbon-coated aluminum-doped silicon-based negative electrode and commercial graphite were compounded into a 550 mAh/g composite material, the ternary positive electrode material, NCM333, was used as a counter electrode, a button cell was assembled in a glove box, which was charged, and then electrochemical performance was evaluated;
(5) a rate test was conducted on the button cell; the test procedure is as follows: charging to 4.2 V at 0.1 C was conducted in the first three cycles, constant-voltage charging to 0.02 C was conducted, and discharging to 2.75 V at 0.1 C was conducted after standing for 5 s; after that, charge and discharge cut-off voltage was kept unchanged, and the charge and discharge rate was changed to 0.5 C, 1 C, 2 C, 3 C, 5 C, 10 C and 0.5 C in turn; each of the above-mentioned rates was cycled for five times, and the average value of each rate in the five times was used to evaluate rate performance; and the results are shown in Table 1.

In order to better illustrate the performance of the silicon-based negative electrode composite material of the present invention , comparative examples are also provided.

### Comparative example 1

(1) Metal silicon powder and silicon dioxide powder were uniformly mixed according to the molar ratio of 2:1, and placed in a high-temperature furnace;
(2) the mixture was sintered at 1200°C for 2 hours in a nitrogen protection atmosphere, and then cooled, crushed and screened;
(3) the screened sample, conductive carbon black SP and sodium carboxymethyl cellulose (CMC) were mixed according to the ratio of 7: 2: 1 to prepare negative electrode slurry, a negative electrode sheet was prepared after coating and drying, the ternary positive electrode material, NCM811, was used as a counter electrode, a button cell was assembled in a glove box, which was charged, and then electrochemical performance was evaluated;
(4) a rate test was conducted on the button cell; the test procedure is as follows: charging to 4.2 V at 0.1 C was conducted in the first three cycles, constant-voltage charging to 0.02 C was conducted, and discharging to 2.75 V at 0.1 C was conducted after standing for 5 s; after that, charge and discharge cut-off voltage was kept unchanged, and the charge and discharge rate was changed to 0.5 C, 1 C, 2 C, 3 C, 5 C, 10 C and 0.5 C in turn; each of the above-mentioned rates was cycled for five times, and the average value of each rate in the five times was used to evaluate rate performance; the results are shown in Table 1; and the triangle mark in Fig. 3 shows the test results of the rate performance of the battery provided in Comparative example 1 of the present invention after five cycles under different charge and discharge rates, and the test data at the rates of 0.5 C, 1 C, 2 C, 3 C, 5 C, 10 C and 0.5 C are shown from left to right.

### Comparative example 2

(1) Metal silicon powder and silicon dioxide powder were uniformly mixed according to the molar ratio of 2:1, and placed in a high-temperature furnace;
(2) the mixture was sintered at 1200°C for 2 hours in a nitrogen protection atmosphere, and then cooled, crushed and screened;
(3) the screened sample was mixed with glucose according to the mass ratio of 20:1, and the mixture was placed in a high-temperature furnace to be subjected to heat treatment at 900°C in a nitrogen atmosphere for 2 hours to obtain a carbon-coated Silicon-based negative electrode;
(4) the carbon-coated Silicon-based negative electrode, conductive carbon black SP and sodium carboxymethyl cellulose (CMC) were mixed according to the ratio of 7: 2: 1 to prepare negative electrode slurry, a negative electrode sheet was prepared after coating and drying, the ternary positive electrode material, NCM811, was used as a counter electrode, a button cell was assembled in a glove box, which was charged, and then electrochemical performance was evaluated;
(5) a rate test was conducted on the button cell; the test procedure is as follows: charging to 4.2 V at 0.1 C was conducted in the first three cycles, constant-voltage charging to 0.02 C was conducted, and discharging to 2.75 V at 0.1 C was conducted after standing for 5 s; after that, charge and discharge cut-off voltage was kept unchanged, and the charge and discharge rate was changed to 0.5 C, 1 C, 2 C, 3 C, 5 C, 10 C and 0.5 C in turn; each of the above-mentioned rates was cycled for five times, and the average value of each rate in the five times was used to evaluate rate performance; and the results are shown in Table 1.

**Table 1**

| No. | Charge specific capacity mAh/g | First-cycle efficiency % | Capacity retention rate at different charging rates % | | | | | | |
|---|---|---|---|---|---|---|---|---|---|
| | | | 0.5C | 1C | 2C | 3C | 5C | 10C | 0.5C |
| Embodiment 1: | 1353 | 84.9 | 96.5 | 94 | 88.5 | 84.3 | 77.8 | 67.8 | 91.8 |
| Embodiment 2: | 1387 | 84.5 | 95.2 | 94.2 | 90.4 | 84.5 | 78.1 | 65.3 | 91.7 |
| Embodiment 3: | 1314 | 84.9 | 96.4 | 94.6 | 88.6 | 84.9 | 78.1 | 67.2 | 92 |
| Embodiment 4: | 1358 | 84.6 | 96.5 | 94.3 | 89.4 | 83.1 | 78.8 | 67.2 | 92 |
| Embodiment 5: | 1366 | 83.4 | 96.5 | 94 | 90.4 | 83.7 | 76 | 67 | 91.1 |
| Embodiment 6: | 1350 | 84.5 | 96.4 | 94 | 89.3 | 84.6 | 77.7 | 66.3 | 90.6 |
| Embodiment 7: | 1336 | 83.1 | 96.4 | 94.6 | 90.7 | 84.6 | 77.2 | 68.6 | 90.5 |
| Embodiment 8: | 1210 | 81.6 | 94.9 | 91.7 | 86.4 | 80.2 | 70.4 | 59.9 | 87.2 |
| Embodiment 9: | 1287 | 82.5 | 95.3 | 92.4 | 87.5 | 81.2 | 71.4 | 61.2 | 89.6 |
| Embodiment 10: | 1383 | 82.5 | 95.7 | 94.7 | 87.1 | 82.3 | 75.6 | 66.8 | 91.5 |
| Embodiment 11: | 1357 | 83.5 | 95.3 | 94.2 | 88.2 | 83.2 | 77.5 | 66.3 | 90.9 |
| Embodiment 12: | 1303 | 84.7 | 96.4 | 94.3 | 90.1 | 84.3 | 78.1 | 67.9 | 91.8 |
| Embodiment 13: | 1326 | 83.2 | 95.2 | 93.1 | 89.4 | 82.7 | 76.9 | 65.9 | 90.1 |
| Embodiment 14: | 449 | 91.9 | 98.6 | 97.3 | 95.7 | 93.2 | 91.3 | 88.6 | 95.6 |
| Embodiment 15: | 551 | 89.7 | 98.3 | 96.8 | 93.2 | 91 | 87.9 | 84.3 | 95.1 |
| Comparative example 1 | 1897 | 70 | 92.3 | 87.1 | 78.9 | 64.2 | 59.6 | 45.3 | 80.2 |
| Comparative example 2 | 1485 | 72.2 | 91.5 | 88.3 | 79.4 | 70.3 | 64.7 | 52.4 | 84.7 |

Table 1 above shows the comparison of the electrochemical performance of lithium secondary batteries prepared in Embodiments 1-15 and Comparative Examples 1-2. In each embodiment, the Silicon-based negative electrode material was doped with N, P or metal elements, and the particles were coated with carbon layers, so that the Silicon-based negative electrodes obtained had high first-cycle efficiency. In particular, due to the improvement of internal and external conductivity of particles, the rate performance of materials was greatly improved. By comparing Embodiment 1 and Comparative example 2, it can be seen that because the magnesium metal element was doped in Embodiment 1, the Li₁₂Mg₃Si₄ alloy formed by the Silicon-based negative electrode in the lithium intercalation state can improve the conductivity inside the particles, and the ductility of the alloy can adapt to the volume expansion of the material, thus increasing the cycling stability. By comparing Embodiment 1 and Comparative example 1, it can be seen that because the magnesium metal element was doped and carbon coating was conducted in Embodiment 1, the first-cycle efficiency and rate performance of the material were obviously improved compared with Comparative Example 1.

The above-mentioned specific embodiments further explain the purpose, technical scheme and beneficial effects of the present invention in detail. It should be understood that the above are only specific embodiments of the present invention and are not used to limit the scope of protection of the present invention, which is defined by the appended claims.

## Claims

1. A Silicon-based negative electrode composite material, wherein the Silicon-based negative electrode composite material is a composite material composed of Silicon-based particles;
the Silicon-based particle contains M_{q}Si before lithium intercalation, 0<q<5;
the Silicon-based particle is a composite material containing LiₓM_{y}Si_{z} alloy in a lithium intercalation state; 0 < x < 25, 0 < y < 5, 0 < z < 6; M is one or more of Ni, Cu, Zn, Al, Na, Mg, Au, N and P;
an average particle diameter (D₅₀) of the Silicon-based particles is 0.1-40 µm, and after lithium intercalation, the LiₓM_{y}Si_{z} alloy is dispersed throughout the Silicon-based particle, a grain size is 0.5-100 nm, the LiₓM_{y}Si_{z} alloy accounts for 5-60 % of a total mass of the Silicon-based negative electrode composite material after lithium intercalation, **characterized in that** the silicon based particle is carbon coated, has a specific surface area is 0.5-40 m²/g and a thickness of the carbon coating layer is 1-100 nm.

2. The Silicon-based negative electrode composite material according to claim 1, wherein the LiₓM_{y}Si_{z} alloy accounts for 10-30% of the total mass of the Silicon-based negative electrode composite material after lithium intercalation;
the thickness of the carbon coating layer is 5-25 nm; and
the average particle diameter (D₅₀) of the Silicon-based particles is 2-15 µm, and the specific surface area is 1-10 m²/g.

3. The Silicon-based negative electrode composite material according to claim 1, wherein
when M is Ni, the LiₓM_{y}Si_{z} alloy is Li₁₃Ni₉Si₁₈ and/or Li₃Ni₆Si₆, and corresponding maximum X-ray diffraction (XRD) peaks are located at 22.1 degrees and/or 47.7 degrees;
when M is Cu, the LiₓM_{y}Si_{z} alloy is LiCuSi, and corresponding maximum XRD peaks are located at 43.0 degrees, 47.62 degrees and 49.8 degrees;
when M is Zn, the LiₓM_{y}Si_{z} alloy is Li₂ZnSi, and corresponding maximum XRD peaks are located at 21.6 degrees and 32.6 degrees;
when M is Al, the LiₓM_{y}Si_{z} alloy is Li₁₂Al₃Si₄ and/or LiAlSi, and corresponding maximum XRD peaks are located at 20.5 degrees and/or 26.0 degrees respectively;
when M is Na, the LiₓM_{y}Si_{z} alloy is Li₃NaSi₆, and corresponding maximum XRD peaks are located at 9.8 degrees;
when M is Mg, the LiₓM_{y}Si_{z} alloy is Li₁₂Mg₃Si₄, and corresponding maximum XRD peaks are located at 20.3 degrees;
when M is Au, the LiₓM_{y}Si_{z} alloy is Li₂Au₃Si, and corresponding maximum XRD peaks are located at 25.4 degrees;
when M is N, the LiₓM_{y}Si_{z} alloy is LiN₃Si₂ and/or Li₈N₄Si and/or Li₂₁N₁₁Si₃ and/or Li₁₈N₁₀Si₃, and corresponding maximum XRD peaks are located at 56.2 degrees and/or 32.3 degrees and/or 23.0 degrees and/or 54.6 degrees respectively; and
when M is P, the LiₓM_{y}Si_{z} alloy is Li₅P₃Si, and corresponding maximum XRD peaks are located at 26.3 degrees.

4. A Silicon-based negative electrode, comprising the silicon-based negative electrode composite material according to any one of claims 1-3.

5. A lithium secondary battery, comprising the Silicon-based negative electrode composite material according to any one of claims 1-3 or the Silicon-based negative electrode according to claim 4.

6. The lithium secondary battery according to claim 5, wherein the lithium secondary battery is any one of a liquid lithium ion battery, a semi-solid lithium ion battery, an all-solid ion battery or a lithium-sulfur battery.

## Patentansprüche

1. Negativelektrodenverbundmaterial auf Siliziumbasis, wobei das Negativelektrodenverbundmaterial auf Siliziumbasis ein Verbundmaterial ist, das aus Partikeln auf Siliziumbasis besteht;
das Partikel auf Siliziumbasis enthält vor der Lithium-Interkalation M_{q}Si, 0<q<5;
das Partikel auf Siliziumbasis ist ein Verbundmaterial, das eine LiₓM_{y}Si_{z}-Legierung in einem Lithium-Interkalationszustand enthält; 0<x<25, 0<y<5, 0<z<6; M ist eines oder mehrere von Ni, Cu, Zn, Al, Na, Mg, Au, N und P;
ein durchschnittlicher Partikeldurchmesser (D₅₀) der Partikel auf Siliziumbasis beträgt 0,1-40 µm, und nach der Lithiuminterkalation ist die LiₓM_{y}Si_{z}-Legierung im gesamten Partikel auf Siliziumbasis verteilt, die Korngröße beträgt 0,5-100 nm, die LiₓM_{y}Si_{z}-Legierung macht nach der Lithium-Interkalation 5-60 % der Gesamtmasse des Negativelektrodenverbundmaterials auf Siliziumbasis aus, **dadurch gekennzeichnet, dass** das auf Silizium basierende Partikel mit Kohlenstoff beschichtet ist, eine spezifische Oberfläche von 0,5-40 m²/g aufweist und die Dicke der Kohlenstoffbeschichtungslage 1-100 nm beträgt.

2. Negativelektrodenverbundmaterial auf Siliziumbasis gemäß Anspruch 1, wobei die LiₓM_{y}Si_{z}-Legierung nach der Lithium-Interkalation 10-30 % der Gesamtmasse des Negativelektrodenverbundmaterials auf Siliziumbasis ausmacht;
die Dicke der Kohlenstoffbeschichtungslage 5-25 nm beträgt; und
der durchschnittliche Partikeldurchmesser (D₅₀) der Partikel auf Siliziumbasis 2-15 µm beträgt und die spezifische Oberfläche 1-10 m²/g beträgt.

3. Negativelektrodenverbundmaterial auf Siliziumbasis gemäß Anspruch 1, wobei
wenn M Ni ist, die LiₓM_{y}Si_{z}-Legierung Li₁₃Ni₉Si₁₈ und/oder Li₃Ni₆Si₆ ist und die entsprechenden maximalen Röntgenbeugungspeaks (XRD) bei 22,1 Grad und/oder 47,7 Grad liegen;
wenn M Cu ist, die LiₓM_{y}Si_{z}-Legierung LiCuSi ist und die entsprechenden maximalen XRD-Peaks bei 43,0 Grad, 47,62 Grad und 49,8 Grad liegen;
wenn M Zn ist, die LiₓM_{y}Si_{z}-Legierung Li₂ZnSi ist und die entsprechenden maximalen XRD-Peaks bei 21,6 Grad und 32,6 Grad liegen;
wenn M Al ist, die LiₓM_{y}Si_{z}-Legierung Li₁₂Al₃Si₄ und/oder LiAlSi ist und die entsprechenden maximalen XRD-Peaks bei 20,5 Grad und/oder 26,0 Grad liegen;
wenn M Na ist, die LiₓM_{y}Si_{z}-Legierung Li₃NaSi₆ ist und die entsprechenden maximalen XRD-Peaks bei 9,8 Grad liegen;
wenn M Mg ist, die LiₓM_{y}Si_{z}-Legierung Li₁₂Mg₃Si₄ ist und die entsprechenden maximalen XRD-Peaks bei 20,3 Grad liegen;
wenn M Au ist, die LiₓM_{y}Si_{z}-Legierung Li₂Au₃Si ist und die entsprechenden maximalen XRD-Peaks bei 25,4 Grad liegen;
wenn M N ist, die LiₓM_{y}Si_{z}-Legierung LiN₃Si₂ und/oder Li₈N₄Si und/oder Li₂₁N₁₁Si₃ und/oder Li₁₈N₁₀Si₃ ist und die entsprechenden maximalen XRD-Peaks bei 56,2 Grad und/oder 32,3 Grad und/oder 23,0 Grad und/oder 54,6 Grad liegen; und
wenn M P ist, die LiₓM_{y}Si_{z}-Legierung Li₅P₃Si ist und die entsprechenden maximalen XRD-Peaks bei 26,3 Grad liegen.

4. Negativelektrode auf Siliziumbasis umfassend das Negativelektrodenverbundmaterial auf Siliziumbasis gemäß einem der Ansprüche 1 bis 3.

5. Lithium-Sekundärbatterie, die das Negativelektrodenverbundmaterial auf Siliziumbasis gemäß einem der Ansprüche 1 bis 3 oder die Negativelektrode auf Siliziumbasis gemäß Anspruch 4 umfasst.

6. Lithium-Sekundärbatterie nach Anspruch 5, wobei die Lithium-Sekundärbatterie eine flüssige Lithium-Ionen-Batterie, eine halbfeste Lithium-Ionen-Batterie, eine Feststoff-Ionen-Batterie oder eine Lithium-Schwefel-Batterie ist.

## Revendications

1. Matériau composite d'électrode négative à base de silicium, dans lequel le matériau composite d'électrode négative à base de silicium est un matériau composite constitué de particules à base de silicium;
la particule à base de silicium contient M_{q}Si avant l'intercalation du lithium, 0 < q < 5;
la particule à base de silicium est un matériau composite contenant un alliage LiₓM_{y}Si_{z} dans un état d'intercalation de lithium; 0 < x < 25,0 < y < 5,0 < z < 6; M est un ou plusieurs des éléments Ni, Cu, Zn, AI, Na, Mg, Au, N et P;
le diamètre moyen de particule (D₅₀) des particules à base de silicium est de 0,1 à 40 µm, et après intercalation du lithium, l'alliage LiₓM_{y}Si_{z} est dispersé dans toute la particule à base de silicium, la taille des grains est de 0,5 à 100 nm, l'alliage LiₓM_{y}Si_{z} représente 5 à 60 % de la masse totale du matériau composite d'électrode négative à base de silicium après intercalation du lithium, **caractérisé en ce que** la particule à base de silicium est revêtuede carbone, présente une surface spécifique de 0,5 à 40 m²/g et une épaisseur de la couche de revêtement de carbone de 1 à 100 nm.

2. Matériau composite d'électrode négative à base de silicium selon la revendication 1, dans lequel l'alliage LiₓM_{y}Si_{z} représente 10 à 30 % de la masse totale du matériau composite d'électrode négative à base de silicium après intercalation de lithium;
l'épaisseur de la couche de revêtement de carbone est comprise entre 5 et 25 nm; et
le diamètre moyen de particule (D₅₀) des particules à base de silicium est compris entre 2 et 15 µm, et la surface spécifique est comprise entre 1 et 10 m²/g.

3. Matériau composite d'électrode négative à base de silicium selon la revendication 1, dans lequel
lorsque M est Ni, l'alliage LiₓM_{y}Si_{z} est Li₁₃Ni₉Si₁₈ et/ou Li₃Ni₆Si₆, et les pics de diffraction des rayons X (XRD) maximaux correspondants sont situés à 22,1 degrés et/ou 47,7 degrés;
lorsque M est Cu, l'alliage LiₓM_{y}Si_{z} est LiCuSi, et les pics de diffraction des rayons X (XRD) maximaux correspondants sont situés à 43,0 degrés, 47,62 degrés et 49,8 degrés;
lorsque M est Zn, l'alliage LiₓM_{y}Si_{z} est Li₂ZnSi, et les pics de diffraction des rayons X maximaux correspondants sont situés à 21,6 degrés et 32,6 degrés;
lorsque M est AI, l'alliage LiₓM_{y}Si_{z} est Li₁₂Al₃Si₄ et/ou LiAlSi, et les pics maximaux correspondants de diffraction des rayons X sont situés respectivement à 20,5 degrés et/ou 26,0 degrés;
lorsque M est Na, l'alliage LiₓM_{y}Si_{z} est Li₃NaSi₆, et les pics maximaux correspondants de diffraction des rayons X (XRD) sont situés à 9,8 degrés;
lorsque M est Mg, l'alliage LiₓM_{y}Si_{z} est Li₁₂Mg₃Si₄, et les pics maximaux correspondants de diffraction des rayons X (XRD) sont situés à 20,3 degrés;
lorsque M est Au, l'alliage LiₓM_{y}Si_{z} est Li₂Au₃Si, et les pics XRD maximaux correspondants sont situés à 25,4 degrés;
lorsque M est N, l'alliage LiₓM_{y}Si_{z} est LiN₃Si₂ et/ou Li₈N₄Si et/ou Li₂₁N₁₁Si₃ et/ou Li₁₈N₁₀Si₃, et les pics XRD maximaux correspondants sont situés respectivement à 56,2 degrés et/ou 32,3 degrés et/ou 23,0 degrés et/ou 54,6 degrés; et
lorsque M est P, l'alliage LiₓM_{y}Si_{z} est Li₅ P₃ Si, et les pics XRD maximaux correspondants sont situés à 26,3 degrés.

4. Électrode négative à base de silicium, comprenant le matériau composite d'électrode négative à base de silicium selon l'une quelconque des revendications 1 à 3.

5. Batterie secondaire au lithium, comprenant le matériau composite d'électrode négative à base de silicium selon l'une quelconque des revendications 1 à 3 ou l'électrode négative à base de silicium selon la revendication 4.

6. Batterie secondaire au lithium selon la revendication 5, dans laquelle la batterie secondaire au lithium est une batterie lithium-ion liquide, une batterie lithium-ion semi-solide, une batterie lithium-ion tout solide ou une batterie lithium-soufre,
